# EUROPÄISCHE PATENTSCHRIFT

(11) **EP 3 834 270 B1**
(45) Veröffentlichungstag und Bekanntmachung des Hinweises auf die Patenterteilung: **02.10.2024**
(21) Anmeldenummer: 19761761.6
(22) Anmeldetag: 14.08.2019
(51) Int. Cl.: H02J 7/00, H01M 10/42, H01M 4/485, H01M 10/0525, H01M 10/48, H01M 50/581, H01M 50/583

(54) **BATTERIEANORDNUNG FÜR DEN HILFSBETRIEB EINES SCHIENENFAHRZEUGS**
BATTERY ARRANGEMENT FOR THE AUXILIARY OPERATION OF A RAIL VEHICLE
DISPOSITIF DE BATTERIE POUR LE FONCTIONNEMENT AUXILIAIRE D'UN VÉHICULE FERROVIAIRE

(30) Priorität: 17.09.2018 AT 507912018
(43) Veröffentlichungstag der Anmeldung: 16.06.2021
(73) Patentinhaber: Siemens Mobility Austria GmbH, 1210 Wien (AT)
(72) Erfinder: FISCHPERER, Rolf, 91338 Igensdorf (DE); MEINERT, Michael, 91056 Erlangen (DE); NEUBER, Christian, 1210 Wien (AT); WEINLICH, Johannes, 1140 Wien (AT); CHMELAR, Werner, 3040 Neulengbach (AT)
(74) Vertreter: Siemens Patent Attorneys
(86) Internationale Anmeldenummer: PCT/EP2019/071851
(87) Internationale Veröffentlichungsnummer: WO 2020/057871

(56) Entgegenhaltungen:
- DE-A1- 102011 086 495
- DE-A1- 102011 089 135
- JP-A- 2010 193 570
- US-A1- 2017 353 042

## Beschreibung

### Technisches Gebiet

Die Erfindung bezieht sich auf eine Batterieanordnung für den Hilfsbetrieb eines Schienenfahrzeugs, umfassend zumindest eine Batterieeinheit, insbesondere eine Hochleistungsbatterie, und eine Schaltung zum Laden und Entladen der Batterieeinheit, wobei die Batterieeinheit über eine elektronische Schutzeinrichtung verfügt.

### Stand der Technik

Batterieeinheiten für den Hilfsbetrieb eines Schienenfahrzeugs, die auch als Hilfsbetriebebatterien bezeichnet werden, dienen insbesondere dazu, in Notfallsituationen Energie für das Schienenfahrzeug bereitzustellen, z.B. für eine Notbeleuchtung. Solche Batterieeinheiten werden z.B. in Schienenfahrzeugen von Untergrundbahnen (Metro) verwendet. Bisher wurden für Hilfsbetriebebatterien Blei-Gel- oder Nickel-Cadmium-Batteriezellen verwendet, welche jedoch eine hohe Masse aufweisen. Die hohe Masse kann dazu führen, dass bereits bei der Auslegung des Schienenfahrzeugs zulässige Achslasten durch andere Masseeinsparungsmaßnahmen sichergestellt werden müssen und dass im Betrieb des Schienenfahrzeugs der Energieverbrauch entsprechend steigt. Entsprechend mussten aufwändige konstruktive und kostenintensive Maßnahmen zur Gewichtseinsparung der Schienenfahrzeuge getroffen werden. Eine Nutzung der Batterieeinheiten für Sonderzwecke, wie Rangierfahrten über längere Zeiträume, oder Spitzenleistungskappung innerhalb des Bordnetzes war nicht möglich.

Daher bietet sich die Verwendung von Lithium-Ionen-Batterieeinheiten an, die über eine vergleichsweise geringere Masse verfügen. Diese verfügen darüber hinaus auch über eine höhere Leistungsfähigkeit und bieten mehr Spielraum zur Bemessung der Kapazität, sodass diese auch ein Fahren des Schienenfahrzeugs ohne Fahrleitung im Depot oder über stromlose Abschnitte ermöglichen. Im Vergleich zu konventionellen Batterieeinheiten sind Lithium-Ionen-Batterieeinheiten diagnosefähig, das heißt, es können bei Lithium-Ionen-Batterieeinheiten der Gesundheits- und Ladezustand festgestellt werden, was eine Aussage über die Verfügbarkeit der Batterieeinheit ermöglicht. Man spricht von der Möglichkeit der zuständigkeitsabhängigen Überwachung (engl. condition based monitoring) und der zuständigkeitsabhängigen Wartung (engl. condition based maintenance).

Lithium-Ionen-Batterieeinheiten benötigen aufgrund ihrer chemischen Eigenschaften elektronische Schutzeinrichtungen, um gefährliche Betriebszustände, wie z.B. Überladung oder Tiefentladung, zu verhindern. Hierbei sind insbesondere ein zu hoher Ladestrom bei tiefen Temperaturen und ein Überladen der Batterieeinheit zu vermeiden. Diese Schutzeinrichtungen beinhalten im Allgemeinen elektronische Bauteile mit begrenzter Verfügbarkeit und schalten die Batterieeinheit nötigenfalls vorbeugend ab. Dies führt dazu, dass sie nicht als Hilfsbetriebebatterien verwendet werden können, weil die erforderliche Verfügbarkeit in Notfällen nicht gewährleistet werden kann.

Das Dokument DE 10 2011 086495 A1 offenbart ein Energiespeichersystem für ein Fahrzeug.

### Darstellung der Erfindung

Es ist eine Aufgabe der vorliegenden Erfindung, eine Schaltung für eine Batterieeinheit anzugeben, mit welcher die Verfügbarkeit der Batterieeinheit in Notfällen erhöht werden kann, ohne die erforderlichen Überwachungen still zu legen.

Die gestellte Aufgabe wird durch eine Batterieanordnung mit den Merkmalen des Patentanspruchs 1 gelöst. Dabei wird ausgegangen von einer Batterieanordnung für einen Hilfsbetrieb (insbesondere ist diese Batterieanordnung für mehrere Arten von Hilfsbetrieben einsetzbar) eines Schienenfahrzeugs, umfassend zumindest eine Batterieeinheit und eine Schaltung zum Laden und Entladen der Batterieeinheit, wobei die Batterieeinheit über eine elektronische Schutzeinrichtung verfügt. Vorgesehen ist,
dass die Schaltung für den positiven Eingang der Batterieeinheit einen Ladepfad zum Laden der Batterieeinheit und einen vom Ladepfad unterschiedlichen Entladepfad zum Entladen der Batterieeinheit aufweist, wobei der Entladepfad den positiven Eingang der Batterieeinheit mit dem positiven Abgang der Batterieeinheit als Entladepfad verbindet,
dass der Ladepfad mit einem oder mehreren elektrischen Bauteilen ausgestattet ist, welche einen Schutz für die Batterieeinheit vor Kurzschlussstrom, Überladung und Überhitzung bieten, und
dass der Entladepfad mit einem oder mehreren elektrischen Bauteilen ausgestattet ist, welche einen Schutz für die Batterieeinheit vor Kurzschlussstrom und Tiefentladung bieten.

Es kann somit als Batterieeinheit auch eine Lithium-Ionen Batterie verwendet werden, die in der Regel über eine elektronische Schutzeinrichtung verfügt. Die Schaltung dient dazu sicherzustellen, dass die Batterieeinheit auch bei Ausfall der elektronischen Schutzeinrichtung sicher verwendet werden kann, andererseits aber die elektronische Schutzeinrichtung sonst wesentliche Schutzfunktionen ausüben kann. Dazu wird der Stromanschluss, in der Regel ein Starkstromanschluss, in zwei Pfade aufgeteilt. Der Entladepfad gewährleistet auch bei Ausfall der elektronischen Schutzeinrichtung (insbesondere bei Notfällen) einen Weg, die Batterieeinheit zu entladen. Erforderliche Schutzfunktionen für das Entladen werden durch einfache Hardware-Schutzelemente gewährleistet, die eine hohe Verfügbarkeit haben und weiterhin die Absicherung der Batterieeinheit sicherstellen. Der Ladepfad bietet die Möglichkeit, die Batterie jederzeit aufzuladen und nötigenfalls auch zu entladen, insbesondere auch bei Störungen im Entladepfad, wobei hier jedoch der volle elektronische Schutz wirksam ist. Die elektronische Schutzeinrichtung ermöglicht die Erfassung der Betriebszustände der Batterieeinheit, wie beispielsweise den Gesundheitszustand (engl. State of Health SOH), Ladezustand (engl. State of Charge, SOC), Spannung, Temperatur und/oder Ströme. Bei Blei- und NiCd-Batterien ist eine derartige Elektronik nicht vorgesehen.

Die elektronische Schutzeinrichtung der Batterieeinheit kann auf Zell- und/oder Modulebene ausgeführt werden, also für eine Batterieeinheit oder für mehrere Batterieeinheiten gemeinsam. Die elektronische Schutzeinrichtung ist dabei insbesondere als Teil der Batterieanordnung selbst vorgesehen, insbesondere als Batteriemanagement-Einheit (engl. battery management unit, BMU) bzw. in diese integriert. Die elektronische Schutzeinrichtung der Batterieeinheit kann aber auch außerhalb der Batterieanordnung, z.B. in Fahrzeugsteuergeräten von Schienenfahrzeugen, vorgesehen sein.

Weiterbildungen der Erfindung sind der Bestandteil der abhängigen Ansprüche.

Eine Ausführungsform der Erfindung sieht vor, dass im Ladepfad als Schutz vor einem Kurzschlussstrom eine oder mehrere elektrische Sicherungen vorgesehen sind. Hierbei kann es sich um in einem Trennschalter, wie einem Lasttrennschalter, integrierte Sicherungen handeln.

Ein Aspekt der Erfindung sieht vor, dass im Ladepfad als Schutz vor unzulässig hohem Strom zumindest ein Ladeschütz zum Abschalten des Ladepfads vorgesehen ist, das mit der elektronischen Schutzeinrichtung in Verbindung steht, wobei die Verbindung so ausgeführt ist, dass das Ladeschütz den Ladepfad abschaltet, wenn die elektronische Schutzeinrichtung einen unzulässig hohen Strom der Batterieeinheit detektiert.

Ein Aspekt der Erfindung sieht vor, dass im Ladepfad als Schutz vor einer Überladung mindestens ein Ladeschütz zum Abschalten des Ladepfads vorgesehen ist, das mit der elektronischen Schutzeinrichtung in Verbindung steht, wobei die Verbindung so ausgeführt ist, dass mindestens ein Ladeschütz den Ladepfad abschaltet, wenn die elektronische Schutzeinrichtung eine Überladung der Batterieeinheit detektiert.

Ein Aspekt der Erfindung sieht vor, dass im Ladepfad als Schutz vor Überhitzung mindestens ein Ladeschütz zum Abschalten des Ladepfads vorgesehen ist, das mit der elektronischen Schutzeinrichtung in Verbindung steht, wobei die Verbindung so ausgeführt ist, dass mindestens ein Ladeschütz den Ladepfad abschaltet, wenn die elektronische Schutzeinrichtung eine Überhitzung, insbesondere der Batterieeinheit, detektiert.

In der Regel wird ein und dasselbe Ladeschütz sowohl für den Schutz vor unzulässig hohem Strom als auch für den Schutz vor Überladung als auch für den Schutz vor Überhitzung verwendet.

Eine Ausführungsform der Erfindung sieht vor, dass im Entladepfad als Schutz vor einem Kurzschlussstrom eine oder mehrere elektrische Sicherungen vorgesehen sind. Hierbei kann es sich um in einem Trennschalter, wie einem Lasttrennschalter, integrierte Sicherungen handeln.

Eine Ausführungsform der Erfindung sieht vor, dass für den Entladepfad als Schutz vor Tiefentladung ein Unterspannungsrelais vorgesehen ist, das eine Unterbrechung des Entladepfads, etwa mittels eines Entladeschützes, auslösen kann. Das Unterspannungsrelais ist hierzu an den beiden Abgangsklemmen der Batterieanordnung angeschlossen und schaltet in Abhängigkeit von der Spannung zwischen den Abgangsklemmen.

Eine Ausführungsform der Erfindung sieht vor, dass im Entladepfad vorgesehene Bauteile (insbesondere z.B. das mindestens eine Entladeschütz und die - siehe unten - Diode(n)) als Schutz vor Überhitzung so dimensioniert sind, dass auch bei voller Entladung der Batterieeinheit gemäß vorgegebener Notfall-Lastprofile keine Überhitzung auftreten kann.

Alternativ oder zusätzlich dazu kann vorgesehen sein, dass im Entladepfad als Schutz vor Überhitzung mindestens ein Entladeschütz mit einer Temperaturüberwachung in Verbindung steht, wobei die Verbindung so ausgeführt ist, dass mindestens ein Entladeschütz den Entladepfad abschaltet, wenn die Temperaturüberwachung eine Überhitzung der Batterieeinheit detektiert.

Eine Ausführungsform der Erfindung sieht vor, dass im Entladepfad mindestens eine Diode vorgesehen ist, die ein ungewolltes Laden der Batterieeinheit verhindert.

Zusätzlich kann auch im Ladepfad mindestens eine, zur Diode im Entladepfad antiparallele Diode vorgesehen sein. Dadurch kann ein unbeabsichtigtes Entladen der Batterieeinheit verhindert werden.

Eine Ausführungsform der Erfindung sieht vor, dass die Batterieeinheit als Schutz vor Unterkühlung mit einem Heizgerät für die Batterieeinheit ausgestattet ist, welches von der elektronischen Schutzeinrichtung steuerbar ist. Stellt die elektronische Schutzeinrichtung eine zu geringe Temperatur der Batterieeinheit fest, kann sie das Heizgerät starten und wieder abschalten, wenn eine vorgegebene Zieltemperatur erreicht ist.

Vorzugsweise ist die Schaltung der Batterieanordnung mit einem Vorladekreis ausgestattet, mittels welchem der Entladepfad an eine Ladeeinheit sowie an eine Last geschaltet werden kann, sodass die Kapazitäten von Ladeeinheit und Last vor dem Zuschalten der Batterieeinheit vorgeladen werden können. Alternativ können die Bauteile (insbesondere die Schütze) so bemessen werden, dass keine Vorladung erforderlich ist.

Für die Betätigung des Vorladekreises sind grundsätzlich eine manuelle oder eine automatische Betätigung möglich. Bei ersterer kann im Vorladekreis ein Relais vorgesehen sein, welches den Vorladekreis im Falle einer Fehlbedienung unterbricht, um eine Überhitzung des Vorladekreises zu verhindern. Betätigt also eine Person einen Taster zum Schließen des Vorladekreises zu lang, so unterbricht das Relais das Vorladen. Alternativ kann die Vorladeeinrichtung so bemessen sein, dass keine Überhitzung möglich ist, und die Vorladeeinrichtung kann in Selbsthaltung gehen.

Alternativ oder zusätzlich kann beim manuell betätigbaren Vorladekreis in Reihe zu einem manuellen Betätigungselement, wie einem Taster, ein Hilfsschütz vorgesehen sein, das mit der elektronischen Schutzeinrichtung in Verbindung steht, sodass dieses verriegelt, d.h. offen gehalten werden kann, um das Zuschalten einer defekten Batterieeinheit zu verhindern.

Eine Ausführungsform der Erfindung besteht darin, dass zusätzlich oder alternativ zur manuellen Betätigung des Vorladekreises mindestens ein automatisch durch Fahrzeugsteuergeräte, also durch außerhalb der Batterieanordnung angeordnete Steuergeräte, betreibbarer Schalter vorgesehen ist. Es kann also z.B. vorgesehen sein, dass der manuelle Taster des Vorladekreises durch mindestens einen automatisch durch Fahrzeugsteuergeräte betriebenen Schalter ergänzt oder ersetzt wird.

Im Falle des automatischen Vorladens kann für den Vorladekreis ein weiteres Unterspannungsrelais vorgesehen sein, das die Vorladung einleitet, wenn eine Spannung der Batterieeinheit detektiert wird. Wenn also die Batterieeinheit durch das Einlegen der Sicherungen (z.B. das Schließen gesicherter Trennschalter) mit der Schaltung leitend verbunden wird, würde die Ausgangsspannung der Batterieeinheit am Unterspannungsrelais anliegen und dieses könnte entsprechend den Vorladekreis schließen.

Die Batterieeinheit der Batterieanordnung ist gemäß einer Ausführungsform der Erfindung eine Lithium-Ionen Batterieeinheit, denkbar wären aber auch andere Batterieeinheiten, die über eine elektronische Schutzeinrichtung verfügen. Mit Lithium-Ionen Batterieeinheiten kann Gewicht und Platz gegenüber herkömmlichen Batterieeinheiten eingespart werden.

Für hinreichend temperaturunempfindliche Lithium-Ionen Batterieeinheiten, z.B. mit Anoden aus Lithium-Titanat (LTO), wäre es sogar denkbar, die herkömmliche elektronische Schutzeinrichtung durch ein Überspannungsrelais zu ersetzen und dieses als Schutzeinrichtung zu verwenden, insbesondere als Schutz vor Überladung. Dieses Überspannungsrelais könnte mit dem gegebenenfalls im Entladepfad vorhandenen Unterspannungsrelais kombiniert werden, indem das Schütz lediglich zwischen dem eingestellten unteren und dem eingestellten oberen Spannungsgrenzwert zugeschaltet wird und der Ladepfad entfällt. Die Diode im Entladepfad könnte dann auch entfallen.

Schließlich umfasst die Erfindung auch eine Batterieanordnung, die in einem Schienenfahrzeug angeordnet ist und mit einer Ladeeinheit eines Schienenfahrzeugs und mit einer Last eines Schienenfahrzeugs verbunden ist.

Dabei kann vorgesehen sein, dass die elektronische Schutzeinrichtung der Batterieeinheit sowie diverse Schütze der erfindungsgemäßen Schaltung in der Batterieanordnung abgeschaltet bleiben, um Energie zu sparen, wenn die Batterieeinheit nicht benötigt wird. Beispielsweise könnte ein Aktivsignal der Ladeeinheit oder das Fahrerstand-Besetzt-Signal oder ein Aktivsignal der Fahrzeugsteuergeräte, wie einer Zugsteuerung, verwendet werden, indem die elektronische Schutzeinrichtung und die Schütze nur eingeschaltet werden, wenn dieses Signal anliegt.

Die erfindungsgemäße Batterieanordnung kann eine oder mehrere Batterieeinheiten (Zellen) umfassen, wobei jede einzelne über eine eigene elektronische Schutzeinrichtung und erfindungsgemäße Schaltung verfügen kann. Es wäre auch denkbar, dass mehrere Zellen untereinander zu einer Batterieeinheit verschaltet sind und diese Zellen dann eine gemeinsame elektronische Schutzeinrichtung und erfindungsgemäße Schaltung haben.

Mit der erfindungsgemäßen Batterieanordnung muss der elektronische Schutz der Batterieeinheiten zur hohen Verfügbarkeit nicht redundant und sicher ausgeführt sein, weil der Entladepfad nicht vom elektronischen Schutz beeinflusst wird. Im Entladepfad kommen nur hoch verfügbare Hardware-Schutzeinrichtungen zum Einsatz. Gegen gefährliche Zustände ist die Batterieeinheit immer noch vollständig abgesichert und vorteilhaft diagnosefähig.

### Kurzbeschreibung der Figuren

Zur weiteren Erläuterung der Erfindung wird im nachfolgenden Teil der Beschreibung auf die Figur Bezug genommen, aus der weitere vorteilhafte Ausgestaltungen, Einzelheiten und Weiterbildungen der Erfindung zu entnehmen sind. Die Figur ist beispielhaft zu verstehen und soll den Erfindungscharakter zwar darlegen, ihn aber keinesfalls einengen oder gar abschließend wiedergeben. Die Figur zeigt ein Schema einer erfindungsgemäßen Batterieanordnung für den Hilfsbetrieb eines Schienenfahrzeugs, umfassend eine Batterieeinheit und eine Schaltung.

### Ausführung der Erfindung

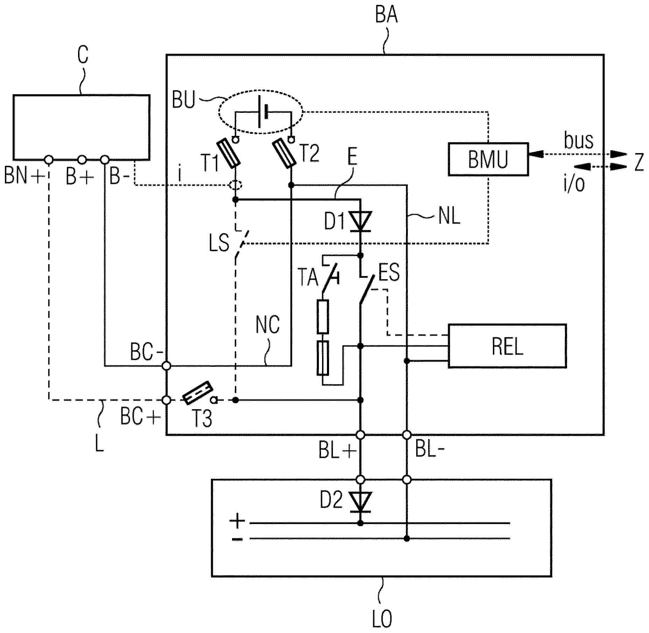

Fig. 1 zeigt ein Schema einer erfindungsgemäßen Batterieanordnung. Die Batterieanordnung BA umfasst zumindest die Batterieeinheit BU und eine Schaltung, welche die Batterieeinheit BU mit einer Ladeeinheit C und einer Last LO verbindet. Die Batterieanordnung BA umfasst eine Batteriemanagement-Einheit BMU.

Die Batterieanordnung BA umfasst einen positiven Eingang BC+ der Batterieanordnung BA für die Ladeeinheit C und einen negativen Eingang BC- der Batterieanordnung BA für die Ladeeinheit C. Der positive Eingang BC+ ist mit dem positiven Eingang der Batterieeinheit BU (bei Trennschalter T1) verbunden, und zwar grundsätzlich sowohl über den Ladepfad L als auch über den Entladepfad E. Der negative Eingang BC- ist mit dem negativen Eingang der Batterieeinheit BU (bei Trennschalter T2) über die Verbindung NC verbunden.

Die Batterieanordnung BA umfasst eine positive Abgangsklemme BL+ für den Anschluss der Last LO und eine negative Abgangsklemme BL- für den Anschluss der Last LO. Die positive Abgangsklemme BL+ ist mit dem positiven Eingang der Batterieeinheit BU (bei Trennschalter T1) verbunden, und zwar sowohl über den Ladepfad L als auch über den Entladepfad E. Die negative Abgangsklemme BL- ist mit dem negativen Eingang der Batterieeinheit BU (bei Trennschalter T2) über die Verbindung NL verbunden.

Die Schaltung weist einen Ladepfad L auf, der fett strichliert dargestellt ist, und einen Entladepfad E, der mit durchgehend fetter Linie dargestellt ist. Der Ladepfad L reicht vom positiven Ausgang BN+ der Ladeeinheit C über den positiven Eingang BC+ der Batterieanordnung BA für die Ladeeinheit C bis vor den positiven Eingang der Batterieeinheit BU, also des eigentlichen Speichermoduls. Der Ladepfad L endet hier vor einem Trennschalter T1, der vor dem positiven Eingang der Batterieeinheit BU angeordnet ist. Der Ladepfad L weist einen Trennschalter T3 auf, der nach dem positiven Eingang BC+ angeordnet ist, vor der Abzweigung zur Abgangsklemme BL+ zur Last LO. Der Trennschalter T3 dient als Berührungsschutz gegen die Spannung der Ladeeinheit C. Der Ladepfad L weist weiters ein Ladeschütz LS auf, das zwischen dem Trennschalter T3 und dem Trennschalter T1 angeordnet ist. Das Ladeschütz LS ist mit der Batteriemanagement-Einheit BMU verbunden, sodass das Ladeschütz LS von der Batteriemanagement-Einheit BMU geschaltet werden kann.

Mit Hilfe des Ladeschützes LS kann die Batteriemanagement-Einheit BMS das Laden erlauben oder unterbinden, gemäß den Sicherheitsvorschriften für die Batterieeinheit BU.

Im Ladepfad L kann ein Stromsensor integriert sein, welcher das Signal des Ladestromes i an die Ladeeinheit C zu Regelungs- und Schutzzwecken übermittelt. Alternativ kann der Stromsensor in der Ladeeinheit C integriert sein.

Der Entladepfad E beginnt am Ende des Ladepfads L, also vor dem positiven Eingang der Batterieeinheit BU, hier vor (mit Bezug auf die Batterieeinheit BU außerhalb) des Trennschalters T1. Der Entladepfad E erstreckt sich bis zum positiven Leiter der Last LO, also hier über die positive Abgangsklemme BL+ zur Last LO bis über eine Diode D2 hinaus, die hier in der Last LO vorgesehen ist. Die Diode D2 dient dazu, eine Rückspeisung aus der Last LO in die Batterieeinheit BU zu verhindern. Es besteht eine Verbindung zwischen dem Entladepfad E vor der positiven Abgangsklemme BL+ mit dem Trennschalter T3. Über diese Verbindung kann einerseits die Ladeeinheit C die Last LO versorgen, und andererseits der Ladepfad L der Batterieeinheit die Last LO versorgen. Im fehlerfreien Zustand der Anlage fließt kein Strom im Entladepfad E und dessen Bauelementen, diese und insbesondere die Diode D1 werden nicht belastet.

Der Entladepfad E weist ein Entladeschütz ES auf, das von einem Unterspannungsrelais REL ausgelöst werden kann. Das Unterspannungsrelais REL ist einerseits mit dem Entladepfad zwischen Entladeschütz ES und positiver Abgangsklemme zur Last LO verbunden, andererseits mit der Verbindung NL zwischen negativer Abgangsklemme BL- und dem negativen Eingang der Batterieeinheit BU.

Ein Vorladekreis, der manuell, z.B. mittels eines Tasters TA, zugeschaltet werden kann, ist parallel zum Entladeschütz ES geschaltet und schaltet den Vorladekreis an die Ladeeinheit C. Die Last LO sorgt dafür, dass die Kapazitäten von Ladeeinheit C und Last LO kontrolliert vorgeladen werden können, sodass kein kurzschlussartiger Strom beim Zuschalten der Batterieeinheit BU über die Trennschalter T2, T3 auftritt. Der Vorladekreis umfasst hier den Taster TA, mindestens eine Sicherung und mindestens einen Widerstand.

Das Entladeschütz ES schaltet automatisch zu, wenn das Unterspannungsrelais REL an den Abgangsklemmen BL+, BL- eine hinreichend große Spannung detektiert. Dies ist der Fall, wenn die Vorladung abgeschlossen ist oder wenn die Ladeeinheit C von sich aus eine entsprechende Spannung eingestellt hat. Eine Diode D1 im Entladepfad E stellt sicher, dass die Batterieeinheit BU nicht ungewollt oder unkontrolliert geladen werden kann. Der Entladepfad E kann nun nicht mehr abgeschaltet werden, es sei denn, das Unterspannungsrelais REL spricht an, wenn die Batterieeinheit einen definierten minimalen Ladezustand (engl. State of Charge, SOC) unterschreitet.

Die Schaltung weist drei Trennschalter T1, T2, T3 auf, die mit einer Sicherung gesichert sind. Ein Trennschalter T1, T2, T3 kann beispielsweise als dreiphasiger Sicherungstrennschalter ausgeführt sein, oder als eine Kombination eines oder mehrerer Trennschalter mit nachfolgender Sicherung. Je ein Trennschalter T1, T2 ist vor den beiden Eingängen der Batterieeinheit BU angeordnet, zum sicheren Freischalten der BU. Ein Trennschalter T3 ist im Ladepfad L nach dem positiven Eingang BC+ der Batterieeinheit BU für die Ladeeinheit C angeordnet, zum sicheren Abtrennen der Ladeeinheit C. Die drei Trennschalter T1, T2, T3 trennen die Speichermodule beidseitig und von der Ladeeinheit C zum Zwecke der Instandhaltung, um also Berührungsschutz zu gewährleisten.

Die Last LO ist gemäß Stand der Technik über eine oder mehrere Dioden D2, hier über Abgangsklemmen BL+, BL-, an die Batterieeinheit BU angebunden, sodass keine Rückspeisung aus der Last LO in die Batterieeinheit BU möglich ist. Die Diode D2 könnte generell auch entfallen, wenn die Ladeeinheit C über eine Zugsammelschiene mehrere Batterieeinheiten laden und/oder entladen muss. Die Spannungsfreiheit der Zugsammelschiene in Richtung der Batterieeinheit kann dann über andere Maßnahmen, z.B. über zusätzliche Trennschalter, sichergestellt werden.

Die Batteriemanagement-Einheit BMU dient als elektronische Schutzeinrichtung für die Batterieeinheit BU und ermöglicht darüber hinaus die Erfassung der Betriebszustände der Batterieeinheit BU, wie beispielsweise den Gesundheitszustand (engl. State of Health SOH), Ladezustand (engl. State of Charge, SOC), Spannung, Temperatur und/oder Ströme. Entsprechend weist die Batteriemanagement-Einheit BMU einen Datenbus bus und eine digitale Schnittstelle i/o auf, die mit der Zugsteuerung Z und/oder Zugdiagnose verbunden ist.

Ausgang B+ der Ladeeinheit C ist ein parallel geschalteter Anschluss in der Ladeeinheit C für das Laden mit integriertem Stromsensor, der jedoch nicht unbedingt zum Führen des gesamten Laststroms geeignet ist.

Im Folgenden werden die einzelnen Schritte bei den verschiedenen Betriebsfällen der erfindungsgemäßen Batterieanordnung BA beschrieben.

### Starten des Regelbetriebs:

Die Betätigungsreihenfolge der Bauteile beim Hochlauf im Regelbetrieb ist wie folgt:
1. Manuelles Schließen Trennschalter T1 bis T3
2. Hochlauf der Batteriemanagement-Einheit BMU durch die anliegende Spannung
3. Betätigung des Vorladetasters (=Taster TA)
4. Schließen des Entladeschützes ES wenn das Spannungsniveau ausreichend ist, die Batterieeinheit BU versorgt die Last LO
5. Hochlauf der Lastgeräte, einschließlich der Ladeeinheit C, alternativ kann dieses auch schon bei anliegender Netzspannung hochlaufen
6. Die Ladeeinheit C übernimmt nach Hochlauf den Laststrom und wartet auf Ladefreigabe.
7. Schließen des Ladeschützes LS sobald die Batteriemanagement-Einheit BMU das Laden freigibt
8. Einstellen des Ladestroms i zusätzlich zum Laststrom in der Ladeeinheit C

Ablauf bei Störfällen bzw. im Notfallbetrieb:
1. Die Ladeeinheit C fällt aus.
2. Der Laststrom kommutiert automatisch in den Entladepfad E.
3. Wenn die Batterieeinheit BU leer ist, spricht das Unterspannungsrelais REL an und öffnet das Entladeschütz ES, der Strom wird unterbrochen.
4. Durch die fehlende Versorgungsspannung gehen alle Verbraucher aus, sowohl die Last LO als auch die Batteriemanagement-Einheit BMU. Damit fällt auch das Ladeschütz LS ab.

Ablauf bei sicherheitskritischen Zuständen im Ladepfad L, z.B. Überspannung, Kurzschlussstrom, Übertemperatur:
1. Die Schutzelektronik in der Batteriemanagement-Einheit BMU erkennt den Zustand.
2. Die Batteriemanagement-Einheit BMU schaltet das Ladeschütz LS ab, der Strom kommutiert auf den Entladepfad E. Überladen ist nun nicht mehr möglich. Übertemperatur im Ladepfad L ist durch Bauteildimensionierung ausgeschlossen. Bei Übertemperatur durch Brand wird das Schienenfahrzeug durch die Brandmeldeanlage stillgelegt (nicht in der Fig. dargestellt).
3. Bei Kurzschluss öffnen die Sicherungen im Trennschalter T1 bis T3.

### Bezugszeichenliste:

- B+: positiver Ausgang der Ladeeinheit C, mit integriertem Stromsensor
- B-: negativer Ausgang der Ladeeinheit C
- BA: Batterieanordnung
- BC+: positiver Eingang der Batterieanordnung BA für die Ladeeinheit C
- BC-: negativer Eingang der Batterieanordnung BA für die Ladeeinheit C
- BL+: positive Abgangsklemme zur Last LO
- BL-: negative Abgangsklemme zur Last LO
- BN+: positiver Ausgang der Ladeeinheit C
- BMU: Batteriemanagement-Einheit
- BU: Batterieeinheit
- bus: Datenbus
- C: Ladeeinheit
- D1: Diode
- D2: Diode
- E: Entladepfad
- ES: Entladeschütz
- i: Ladestrom (von Stromsensor)
- i/o: digitaler Ein/Ausgang
- L: Ladepfad
- LO: Last
- LS: Ladeschütz
- NC: Verbindung (zwischen negativem Eingang BC- und dem negativen Eingang der Batterieeinheit BU)
- NL: Verbindung (zwischen negativer Abgangsklemme BL- und dem negativen Eingang der Batterieeinheit BU)
- REL: Unterspannungsrelais
- T1,T2,T3: Trennschalter
- TA: Taster
- Z: Zugsteuerung

## Patentansprüche

1. Batterieanordnung (BA) für einen Hilfsbetrieb eines Schienenfahrzeugs, umfassend zumindest eine Batterieeinheit (BU) , wobei die Batterieeinheit (BU) über eine elektronische Schutzeinrichtung (BMU) verfügt und eine Schaltung zum Laden und Entladen der Batterieeinheit, wobei diese Schaltung für den positiven Eingang der Batterieeinheit (BU), insbesondere einer Lithium-Ionen Batterieeinheit, einen Ladepfad (L) zum Laden der Batterieeinheit (BU) und einen vom Ladepfad (L) unterschiedlichen Entladepfad (E) zum Entladen der Batterieeinheit (BU) aufweist, wobei der Entladepfad (E) den positiven Eingang der Batterieeinheit (BU) mit einer positiven Abgangsklemme (BL+) der Batterieanordnung (BA) als Entladepfad verbindet, und wobei der Ladepfad (L) mit einem oder mehreren elektrischen Bauteilen ausgestattet ist, welche einen Schutz für die Batterieeinheit (BU) vor Kurzschlussstrom, Überladung und Überhitzung bieten, und wobei der Entladepfad (E) mit einem oder mehreren elektrischen Bauteilen ausgestattet ist, welche einen Schutz für die Batterieeinheit vor Kurzschlussstrom bieten,
**dadurch gekennzeichnet, dass**
im Ladepfad (L) mindestens ein Ladeschütz (LS) zum Abschalten des Ladepfads vorgesehen ist, das mit der elektronischen Schutzeinrichtung (BMU) in Verbindung steht, wobei die Verbindung so ausgeführt ist, dass mindestens ein Ladeschütz (LS) den Ladepfad (L) abschaltet, wenn die elektronische Schutzeinrichtung (BMU) eine Überladung der Batterieeinheit (BU) und/oder einen unzulässig hohen Strom der Batterieeinheit (BU) und/oder eine Überhitzung detektiert.

2. Batterieanordnung (BA) nach Anspruch 1, **dadurch gekennzeichnet, dass** im Ladepfad (L) und/oder im Entladepfad (E) als Schutz vor einem Kurzschlussstrom eine oder mehrere elektrische Sicherungen vorgesehen sind.

3. Batterieanordnung (BA) nach einem der vorhergehenden Ansprüche, **dadurch gekennzeichnet, dass** für den Entladepfad (E) als Schutz vor Tiefentladung ein Unterspannungsrelais (REL) vorgesehen ist, das eine Unterbrechung des Entladepfads (E), etwa mittels eines Entladeschützes (ES), auslösen kann.

4. Batterieanordnung (BA) nach einem der vorhergehenden Ansprüche, **dadurch gekennzeichnet, dass** im Entladepfad (E) vorgesehene Bauteile als Schutz vor Überhitzung so dimensioniert sind, dass auch bei voller Entladung der Batterieeinheit (BU) gemäß vorgegebener Notfall-Lastprofile keine Überhitzung auftreten kann.

5. Batterieanordnung (BA) nach einem der vorhergehenden Ansprüche, **dadurch gekennzeichnet, dass** im Entladepfad (E) als Schutz vor Überhitzung mindestens ein Entladeschütz (ES) mit einer Temperaturüberwachung in Verbindung steht, wobei die Verbindung so ausgeführt ist, dass das mindestens eine Entladeschütz (ES) den Entladepfad (E) abschaltet, wenn die Temperaturüberwachung eine Überhitzung der Batterieeinheit (BU) detektiert.

6. Batterieanordnung (BA) nach einem der vorhergehenden Ansprüche, **dadurch gekennzeichnet, dass** im Entladepfad (E) mindestens eine Diode (D1) vorgesehen ist, die ein ungewolltes Laden der Batterieeinheit (BU) verhindert.

7. Batterieanordnung (BA) nach Anspruch 6, **dadurch gekennzeichnet, dass** im Ladepfad (L) mindestens eine, zur Diode (D1) im Entladepfad antiparallele Diode vorgesehen ist.

8. Batterieanordnung (BA) nach einem der vorhergehenden Ansprüche, **dadurch gekennzeichnet, dass** ein Vorladekreis vorgesehen ist, mittels welchem der Entladepfad (E) an eine Ladeeinheit (C) sowie an eine Last (LO) geschaltet werden kann, sodass die Kapazitäten von Ladeeinheit (C) und Last (LO) vor dem Zuschalten der Batterieeinheit (BU) vorgeladen werden können.

9. Batterieanordnung (BA) nach Anspruch 8, **dadurch gekennzeichnet, dass** der Vorladekreis manuell betätigbar ist, wobei im Vorladekreis ein Relais vorgesehen ist, welches den Vorladekreis im Falle einer Fehlbedienung unterbricht, um eine Überhitzung des Vorladekreises zu verhindern.

10. Batterieanordnung (BA) nach Anspruch 8 oder 9, **dadurch gekennzeichnet, dass** der Vorladekreis manuell betätigbar ist, wobei in Reihe zu einem manuellen Betätigungselement, wie einem Taster (TA), ein Hilfsschütz vorgesehen ist, das mit der elektronischen Schutzeinrichtung (BMU) in Verbindung steht, sodass dieses verriegelt werden kann, um das Zuschalten einer defekten Batterieeinheit (BU) zu verhindern.

11. Batterieanordnung (BA) nach Anspruch 9 oder 10, **dadurch gekennzeichnet, dass** zusätzlich oder alternativ zur manuellen Betätigung des Vorladekreises mindestens ein automatisch durch Fahrzeugsteuergeräte betreibbarer Schalter vorgesehen ist.

12. Batterieanordnung (BA) nach Anspruch 8, **dadurch gekennzeichnet, dass** zum automatischen Vorladen für den Vorladekreis ein weiteres Unterspannungsrelais vorgesehen ist, das die Vorladung einleitet, wenn eine Spannung der Batterieeinheit (BU) detektiert wird.

13. Batterieanordnung (BA) nach einem der vorhergehenden Ansprüche, **dadurch gekennzeichnet, dass**, insbesondere für Lithium-Ionen Batterieeinheiten mit Anoden aus Lithium-Titanat, die elektronische Schutzeinrichtung (BMU) durch ein Überspannungsrelais ersetzt wird, welches dem Schutz vor Überladung dient, wobei dieses Überspannungsrelais mit dem gegebenenfalls im Entladepfad (E) vorhandenen Unterspannungsrelais (REL) kombiniert ist, indem das Entladeschütz (ES) lediglich zwischen dem eingestellten unteren und dem eingestellten oberen Spannungsgrenzwert zuschaltbar ist, und der Ladepfad (L) entfällt.

14. Batterieanordnung (BA) nach einem der vorhergehenden Ansprüche, **dadurch gekennzeichnet, dass** die Batterieanordnung in einem Schienenfahrzeug angeordnet ist und mit einer Ladeeinheit (C) eines Schienenfahrzeugs und mit einer Last (LO) eines Schienenfahrzeugs verbunden ist.

## Claims

1. Battery arrangement (BA) for an auxiliary operation of a rail vehicle, comprising at least one battery unit (BU), wherein the battery unit (BU) has an electronic protection device (BMU) and a circuit for charging and discharging the battery unit, wherein for the positive input of the battery unit (BU), in particular a lithium ion battery unit, this circuit has a charge path (L) for charging the battery unit (BU) and a discharge path (E) which differs from the charge path (L) for discharging the battery unit (BU), wherein the discharge path (E) connects the positive input of the battery unit (BU) with a positive output terminal (BL+) of the battery arrangement (BA) as a discharge path, and wherein the charge path (L) is equipped with one or more electrical components, which offer protection for the battery unit (BU) from short-circuit current, overcharging and overheating, and wherein the discharge path (E) is equipped with one or more electrical components, which offer protection for the battery unit from short-circuit current,
**characterised in that**
at least one charging contactor (LS) is provided in the charge path (L) for switching off the charge path which is connected to the electronic protection device (BMU), wherein the connection is embodied so that at least one charging contactor (LS) switches off the charge path (L) when the electronic protection device (BMU) detects an overcharge of the battery unit (BU) and/or an impermissibly high current of the battery unit (BU) and/or an overheating.

2. Battery arrangement (BA) according to claim 1, **characterised in that** one or more electrical fuses are provided in the charge path (L) and/or in the discharge path (E) as a protection against a short-circuit current.

3. Battery arrangement (BA) according to one of the preceding claims, **characterised in that** an overvoltage relay (REL) is provided for the discharge path (E) as a protection against deep discharge, said overvoltage relay being able to trigger an interruption in the discharge path (E), for instance by means of a discharge contactor (ES).

4. Battery arrangement (BA) according to one of the preceding claims, **characterised in that** components provided in the discharge path (E) are dimensioned as protection against overheating so that no overheating can occur even when the battery unit (BU) is fully discharged according to predetermined emergency load profiles.

5. Battery arrangement (BA) according to one of the preceding claims, **characterised in that** in the discharge path (E) as a protection against overheating, at least one discharge contactor (ES) is connected to a temperature monitor, wherein the connection is designed such that the at least one discharge contactor (ES) switches off the discharge path (E) when the temperature monitor detects an overheating of the battery unit (BU).

6. Battery arrangement (BA) according to one of the preceding claims, **characterised in that** at least one diode (D1), which prevents an unwanted charging of the battery unit (BU), is provided in the discharge path (E).

7. Battery arrangement (BA) according to claim 6, **characterised in that** at least one diode which is antiparallel to the diode (D1) in the discharge path is provided in the charge path (L).

8. Battery arrangement (BA) according to one of the preceding claims, **characterised in that** a precharge circuit is provided, by means of which the discharge path (E) can be connected to a charging unit (C) and to a load (LO) so that the capacitances of the charging unit (C) and load (LO) can be precharged before connecting the battery unit (BU).

9. Battery arrangement (BA) according to claim 8, **characterised in that** the precharge circuit can be actuated manually, wherein in the precharge circuit a relay is provided, which interrupts the precharge circuit in the case of faulty operation in order to prevent an overheating of the precharge circuit.

10. Battery arrangement (BA) according to claim 8 or 9, **characterised in that** the precharge circuit can be manually actuated wherein in series with a manual actuation element, such as a button (TA), an auxiliary contactor is provided, which is connected to the electronic protection device (BMU) so that this can be locked to prevent a faulty battery unit (BU) from being switched on.

11. Battery arrangement (BA) according to claim 9 or 10, **characterised in that** in addition or alternatively to the manual actuation of the precharge circuit, at least one switch which can be operated automatically by vehicle control devices is provided.

12. Battery arrangement (BA) according to claim 8, **characterised in that** a further overvoltage relay is provided to automatically precharge for the precharge circuit, which introduces the precharge if a voltage of the battery unit (BU) is detected.

13. Battery arrangement (BA) according to one of the preceding claims, **characterised in that** in particular for lithium ion battery units with anodes from lithium titanate, the electronic protection device (BMU) is replaced by an overvoltage rely, which is used to protect against overcharge, wherein this overvoltage relay is combined with the undervoltage relay (REL) which exists in the discharge path (E), by it only being possible to switch on the discharge contactor (ES) between the set lower and the set upper voltage limit value, and the charge path (L) is omitted.

14. Battery arrangement (BA) according to one of the preceding claims, **characterised in that** the battery arrangement is arranged in a rail vehicle and connected to a charging unit (C) of a rail vehicle and to a load (LO) of a rail vehicle.

## Revendications

1. Agencement de batterie (BA) destiné au fonctionnement auxiliaire d'un véhicule ferroviaire, comprenant au moins une unité de batterie (BU), dans lequel l'unité de batterie (BU) est munie d'un dispositif de protection électronique (BMU), et un circuit permettant de charger et décharger l'unité de batterie, dans lequel ledit circuit présente, pour l'entrée positive de l'unité de batterie (BU), en particulier d'une unité de batterie lithium-ion, un chemin de charge (L) permettant de charger l'unité de batterie (BU) et un chemin de décharge (E) différent du chemin de charge (L) et permettant de décharger l'unité de batterie (BU), dans lequel le chemin de décharge (E) relie l'entrée positive de l'unité de batterie (BU) à une borne de sortie positive (BL+) de l'agencement de batterie (BA) afin de faire office de chemin de décharge, et dans lequel le chemin de charge (L) est équipé d'un ou plusieurs composant(s) électrique(s) qui offre(nt) pour l'unité de batterie (BU) une protection contre le courant de court-circuit, la surcharge et la surchauffe, et dans lequel le chemin de décharge (E) est équipé d'un ou plusieurs composant(s) électrique(s) qui offre(nt) pour l'unité de batterie une protection contre le courant de court-circuit,
**caractérisé en ce que**
au moins un contacteur de charge (LS) permettant de couper le chemin de charge et se trouvant en liaison avec le dispositif électronique de protection (BMU) est fourni dans le chemin de charge (L), dans lequel ladite liaison est conçue de sorte qu'au moins un contacteur de charge (LS) coupe le chemin de charge (L) lorsque le dispositif électronique de protection (BMU) détecte une surcharge de l'unité de batterie (BU) et/ou un courant trop élevé de l'unité de batterie (BU) et/ou une surchauffe.

2. Agencement de batterie (BA) selon la revendication 1, **caractérisé en ce qu'**un ou plusieurs fusible(s) électrique(s) est/sont fourni(s) dans le chemin de charge (L) et/ou dans le chemin de décharge (E) afin d'assurer une protection contre un courant de court-circuit.

3. Agencement de batterie (BA) selon l'une quelconque des revendications précédentes, **caractérisé en ce qu'**un relais de sous-tension (REL) pouvant provoquer une interruption du chemin de décharge (E), par exemple au moyen d'un contacteur de décharge (ES), est fourni pour le chemin de décharge (E) afin d'assurer une protection contre une décharge profonde.

4. Agencement de batterie (BA) selon l'une quelconque des revendications précédentes, **caractérisé en ce que** les composants fournis dans le chemin de décharge (E) afin d'assurer une protection contre la surchauffe sont dimensionnés de sorte qu'aucune surchauffe ne peut se produire même en cas de décharge complète de l'unité de batterie (BU) correspondant à des profils de consommation d'urgence prédéterminés.

5. Agencement de batterie (BA) selon l'une quelconque des revendications précédentes, **caractérisé en ce qu'**au moins un contacteur de décharge (ES) est en liaison avec une surveillance de température dans le chemin de décharge (E) afin d'assurer une protection contre la surchauffe, dans lequel la liaison est conçue de sorte que le au moins un contacteur de décharge (ES) coupe le chemin de décharge (E) lorsque la surveillance de la température détecte une surchauffe de l'unité de batterie (BU).

6. Agencement de batterie (BA) selon l'une quelconque des revendications précédentes, **caractérisé en ce qu'**au moins une diode (Dl) empêchant une charge indésirable de l'unité de batterie (BU) est fournie dans le chemin de décharge (E).

7. Agencement de batterie (BA) selon la revendication 6, **caractérisé en ce qu'**au moins une diode, antiparallèle à la diode (D1) située dans le chemin de décharge, est fournie dans le chemin de charge (L).

8. Agencement de batterie (BA) selon l'une quelconque des revendications précédentes, **caractérisé en ce qu'**un circuit de précharge est fourni, au moyen duquel le chemin de décharge (E) peut être commuté à une unité de charge (C) ainsi qu'à un consommateur (LO), de sorte que les capacités de l'unité de charge (C) et du consommateur (LO) peuvent être préchargées avant la commutation de l'unité de batterie (BU).

9. Agencement de batterie (BA) selon la revendication 8, **caractérisé en ce que** le circuit de précharge peut être actionné manuellement, dans lequel un relais, interrompant le circuit de précharge en cas de fonctionnement incorrect afin d'éviter une surchauffe du circuit de précharge, est fourni dans le circuit de précharge.

10. Agencement de batterie (BA) selon la revendication 8 ou 9, **caractérisé en ce que** le circuit de précharge peut être actionné manuellement, dans lequel un contacteur auxiliaire, qui est en liaison avec le dispositif électronique de protection (BMU) de sorte que ledit contacteur auxiliaire peut être verrouillé pour empêcher la commutation d'une unité de batterie (BU) défectueuse, est fourni en étant monté en série par rapport à un élément d'actionnement manuel, tel qu'un bouton-poussoir (TA).

11. Agencement de batterie (BA) selon la revendication 9 ou 10, **caractérisé en ce qu'**au moins un commutateur pouvant être actionné automatiquement par des appareils de commande de véhicule est fourni, de manière supplémentaire ou en variante par rapport à l'actionnement manuel du circuit de précharge.

12. Agencement de batterie (BA) selon la revendication 8, **caractérisé en ce qu'**un autre relais de sous-tension, initiant la précharge lorsqu'une tension de l'unité de batterie (BU) est détectée, est fourni pour la précharge automatique destinée au circuit de précharge.

13. Agencement de batterie (BA) selon l'une quelconque des revendications précédentes, **caractérisé en ce que,** en particulier pour des unités de batterie lithium-ion comprenant des anodes en titanate de lithium, le dispositif électronique de protection (BMU) est remplacé par un relais de surtension servant à la protection contre la surcharge, dans lequel ledit relais de surtension est combiné avec le relais de sous-tension (REL) éventuellement présent dans le chemin de décharge (E), le contacteur de décharge (ES) ne pouvant être commuté qu'entre la valeur limite de tension inférieure ajustée et la valeur limite de tension supérieure ajustée, et le chemin de charge (L) est supprimé.

14. Agencement de batterie (BA) selon l'une quelconque des revendications précédentes, **caractérisé en ce que** l'agencement de batterie est agencé dans un véhicule ferroviaire et est relié à une unité de charge (C) d'un véhicule ferroviaire et à un consommateur (LO) d'un véhicule ferroviaire.
